# EUROPEAN PATENT APPLICATION

(11) **EP 1 998 569 A1**
(43) Date of publication of application: **03.12.2008**
(21) Application number: 06828449.6
(22) Date of filing: 25.12.2006
(51) Int. Cl.: H04N 7/26

(54) **METHOD FOR MAPPING IMAGE ADDRESSES IN MEMORY**

(30) Priority: 28.02.2006 CN 200610024203
(71) Applicant: Shanghai Magima Digital Information Co., Ltd., Zhangjiang Hi-Tech Park, Pudong Shanghai 201203 (CN); Magima Technology Co., Limited, Mongkok KL Hong Kong (CN)
(72) Inventor: CHOU, Jenya, Shanghai 201203 (CN); ZHANG, Yaling, Shanghai 201203 (CN); SUN, Minliang, Shanghai 201203 (CN)
(74) Representative: Baroni, Matteo
(86) International application number: PCT/CN2006/003588
(87) International publication number: WO 2007/098658

(57) **Abstract**

The invention discloses a method for mapping picture addresses in a memory, such that decoded picture data can be mapped in corresponding address in a memory. The memory comprises at least two memory arrays, each of which comprises multiple memory rows. The mapping method comprises the following steps: dividing one picture frame into multiple rectangle macroblocks; providing a memory for storing picture data and setting integral neighbor macroblocks of an picture frame as one mapping unit; one by one, the mapping units of picture data are consecutively mapped into the memory in the order of left to right in horizontal directions and up to down in vertical directions; mapping at least one mapping unit of picture data into the same memory row of the same memory array until the said memory row is full; switching the memory array and mapping the adjacent next mapping unit of picture data. The above steps are repeated until completing the mapping of one picture frame.

## Description

### Technical Field

The present invention relates to picture storing technology, including video picture data stored in Synchronous Dynamic Random Access Memory (SDRAM), and particularly relates to a method for mapping picture addresses in a memory.

### Background of the Invention

Transmission of digital video is extensively applied to multi-media industry, such as digital TV (HDTV), set-top box, DVD and so on. In order to reduce requirement of bandwidth, coding, decoding and the like are usually used to compress video. Digital video compression algorithm generally reduces contents of pictures or groups of picture by eliminating redundant portions in video signals. In video compression algorithm, for example MPEG2, MPEG4 and H.264, a picture frame is divided into multiple macroblocks of 16.times.16 or 8.times.8, eliminating redundant portions in space; meanwhile redundant portions are eliminated temporarily by motion prediction and motion compensation.

In video compression coding, based on similarity of adjacent frames of motion pictures, through motion prediction, compression efficiency of video data is improved by referring to similarity of the frame and the previous frame, reducing redundant data similar to the previous frame, and only recording the data different from the previous frame. This compression method is also called frame association compression. In the process of MPEG2 compression, a group of picture (GOP) is set as one unit, including I frame, B frame and P frame. I frame is called reference frame. The so-called reference frame is a start frame referred by other frames. So I frame can fully record all the picture data of the frame, and is also called full frame. P frame is a forward prediction frame, which deletes the data similar to the previous frame according to comparison of the frame and the previous frame. B frame is a bi-directional prediction frame, which is produced by comparison of the frame with the previous frame and the next frame. P, B frames are incomplete frames, and are produced dependent on I frame. The motion prediction comprises two processes: dividing a picture into a plurality of macroblocks of 16 pixel .times. 16 pixel (four macroblocks of 8 pixel .times. 8 pixel); searching and determining its position in the next frame to generate a motion vector.

In video decoding computation, a full image is retrieved by motion compensation. Picture data are normally stored in Synchronous Dynamic Random Access Memory. The motion compensation parts of incomplete frames calculate to get reference macroblocks of corresponding frames based on basic values and motion vectors. The reference blocks are motion compensated to get full frames. Therefore, motion compensation need to access the memory frequently. Especially when a B frame is decoded in a bi-directional prediction, a forward reference frame and a backward reference frame in the memory respectively input a reference macroblock, and after calculation, a macroblock is output to the memory. The whole macroblock calculation process needs to read the memory twice and write the memory once. For example, a luminance component Y of a pixel with an integer motion vector, in general, reads two macroblocks of 16.times.16 and writes a macroblock of 16.times.16. Particularly, the written macroblock has a certain start address. However, a reference macroblock input by a reference frame has a start address, which is determined by a motion vector and is thus uncertain. The motion compensation calculates with interpolation values during reconstruction. The macroblocks sampling positions matching are very precise, up to half a pixel or less. Thus, the reference macroblocks may be large up to 17.timers.17, and uncertain addresses occur more efficiently.

On the other aspect, during working of the memory, the memory remains the accessed part of row addresses of the bank. If the required data are in the same row, the amplified sensor need not transit, and the row is hit. When the row is hit, once the column address is determined, the required address is found to retrieve required data. In some cases, the required row address is not the same as the row address accessed last time, that is, the two neighboring accessed addresses are not associated. Two conditions would occur. If the required memory unit is not in the same bank as accessed last time, a new bank is opened; if the required memory unit is in the same bank as accessed last time and only the row address is not the same, this situation is called "row miss", and precharge is needed. The current row address is closed, and the currently activated bank is closed. Then the same bank is activated again, and a new row address is opened. In this way, the new row address is accessed. The two neighboring access commands, which are not associated, cost 4-6 clock cycles due to stay of precharge. The two neighboring associated access commands, which access the same row address of the same bank and have the same read/write attributes, merely takes 1 clock cycle. The difference of the consumed time is very large.

The start addresses of reference macroblocks input by the reference frames in motion compensation are uncertain, and probably lead to repeated access to the memory, resulting in repeated precharge of the memory. In MPEG algorithm, bandwidth of reference macroblocks is generally over 2/3. Particularly when the data width of the memory adds, the bandwidth of reference macroblocks might increase. It is a problem need be solved in MPEG decoding technology how to reduce the cost of accessing the memory when reading/writing reference macroblocks.

Decoding bandwidth is also associated with output of a decoder. According to MPEG standards, output formats of a decoder have two types: frame output format and field output format. The frame output format normally outputs a 16.times.16 macroblock, while the field output format interlace-scans and normally outputs two 16.times.16 macroblocks, that is, one output unit is 16.times.32. It is a considerable issue in decoder design how to meet the need of both frame output format and field output format thereby minimizing precharge frequency of the memory.

### Summary of the Invention

In order to overcome the defects of the prior art, the present invention provides a method for mapping video picture data addresses to memory in video decoding, which meets the need of both frame output format and field output format of MPEG standards, and which decreases row miss probability when accessing the memory to read reference macroblocks, minimizing consumption when accessing the memory to read reference macroblocks, thereby reducing requirement of system bandwidth.

According to an aspect of the present invention, a method for mapping picture addresses in a memory, such that decoded picture data can be mapped in corresponding address in a memory, the memory comprising at least two memory banks, each of which comprising multiple memory rows. The method comprises the following steps:
(a) dividing a picture frame into a plurality of rectangular macroblocks;
(b) setting integral neighboring macroblocks of a picture frame as one mapping unit;
(c) mapping the mapping units of picture data being consecutively, and one by one, into the memory in the order of left to right in horizontal direction and up to down in vertical direction;
(d) mapping at least one mapping unit of picture data into the same memory row of the same memory bank until the memory row is full;
(e) switching the memory bank, and mapping the adjacent next mapping unit of picture data; and
(f) repeating the steps (c), (d) and (e) until completing the mapping of one picture frame.

According to another aspect of the present invention, the step (d) further comprises pixels of each macroblock of one mapping unit being consecutively stored in the same memory row of the same memory bank of the memory.

According to another aspect of the present invention, the step (b) further comprises integral vertically neighboring macroblocks of a picture frame being set as one mapping unit.

According to another aspect of the present invention, the step (b) further comprises setting two vertically neighboring macroblocks of a picture frame as one mapping unit.

According to another aspect of the present invention, the step (b) further comprises setting the Nth power of two of vertically neighboring macroblocks of a picture frame as one mapping unit, in which N is a positive integer.

According to another aspect of the present invention, when the picture data are YUV format, the step (c) further comprises Y component signals being mapped firstly, and UV component signals being arrayed together and mapped by means of packet.

According to another aspect of the present invention, when the picture is field output, and macroblocks of each mapping unit comprises interlaced odd field pixels and even field pixels, the step (c) further comprises the odd field pixels being mapped consecutively and one by one to the memory in order of from left to right and from up to down, and the even field pixels of each mapping unit being mapped consecutively and one by one to the memory in order of from left to right and from up to down, the odd field pixels and the even field pixels being interlaced.

According to another aspect of the present invention, the step (c) further comprises all the odd field pixels of a picture frame being mapped firstly, and all the even field pixels of a picture frame being mapped.

According to another aspect of the present invention, during mapping, reference macroblocks in the memory are accessed in order of from left to right in horizontal direction and from up to down in vertical direction.

According to another aspect of the present invention, size of one mapping unit suits for length of one memory row of the memory such that the length of one memory row of the memory is integral times as much as the size of one mapping unit.

According to the present invention, two vertically neighboring macroblocks are set as one mapping unit for mapping picture addresses, and reference macroblocks are accessed in a predetermined way. Therefore probability of missing memory row decreases when accessing reference macroblocks in the memory. At the same time, requirements of both field output format and frame output format are meet. Precharge in the process of accessing memory decreases, while the whole efficiency of accessing the memory increases.

### Brief Description of the Drawings

The drawings are auxiliary interpretation of the exemplary embodiments of the invention, and are combined with the exemplary embodiments for further disclosing, but not limiting, features of the present invention. The same signs in the accompanying drawings are designated as corresponding components or steps of the embodiments, in which:
FIG. 1 is a frame view of multiple rectangular macroblocks of Y, U and V component pixels of a picture frame.
FIG. 2 is a flow chart of a method for mapping picture addresses to a memory.
FIG. 3A is a diagram of pixels orders of Y macroblocks mapped to memory addresses according an embodiment of the present invention.
FIG. 3B is a diagram of pixels orders of U and V macroblocks mapped to memory addresses according an embodiment of the present invention.
FIGs. 4A and 4B respectively illustrate two Y component mapping units of a Y component frame, and two UV component mapping units of a UV mixed component frame.
FIG. 5A is a diagram of Y component mapping unit being mapped to memory addresses according to an embodiment of the present invention.
FIG. 5B is a diagram of UV component mapping unit being mapped to memory addresses according to an embodiment of the present invention.
FIGs. 6A and 6B exemplarily illustrate the order of macroblock mapped in memory addresses according to the present invention from different aspects.
FIGs. 7A - 7D illustrate four likely states of memory addresses mapping when reference macroblocks are accessed.
FIG. 8 is a diagram of picture data being mapped to memory addresses according to another embodiment of the present invention.

### Detailed Description of the Embodiments

In a TV system, transmission of all the pixels of a picture frame is called a frame disposition. MPEG decoding includes frame mode and field mode. In the frame mode, a picture frame is a complete field, and is scanned in the order of left to right and up to down; in the field mode, a picture frame is divided into an odd field and an even field which are interlaced, and may be scanned in the order of the odd field first and the even field. If the scanning frequency is determined, the scanned rows of a picture frame can be determined. It can be actually understood that, each picture frame comprises a plurality of rows, and each row comprises a plurality of pixels. In MPEG decoding standards, pictures may be transferred and stored by means of macroblocks. Each picture frame is divided into a plurality of rectangular macroblocks, each macroblock comprising a certain number of rows, and each row comprising a certain number of pixels. It can also be understood, each macroblock comprising a certain number of rows and a certain number of columns. A picture frame is divided into a plurality of rectangular macroblocks, and a picture frame is also called a frame picture.

Component video is generally used to demonstrate digital video compression. In YUV format, Y is luminance component, U, V are chroma components, respectively. Combination of luminance and chroma sampling does not impair quality of pictures, and decreases demand of bandwidth. In some embodiments of the present invention, picture data are encoded and decoded in YUV format.

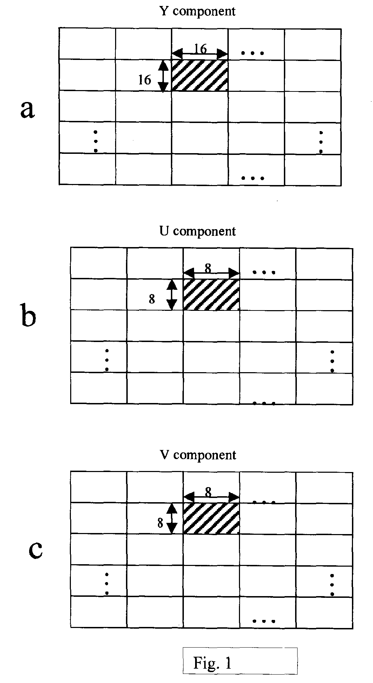

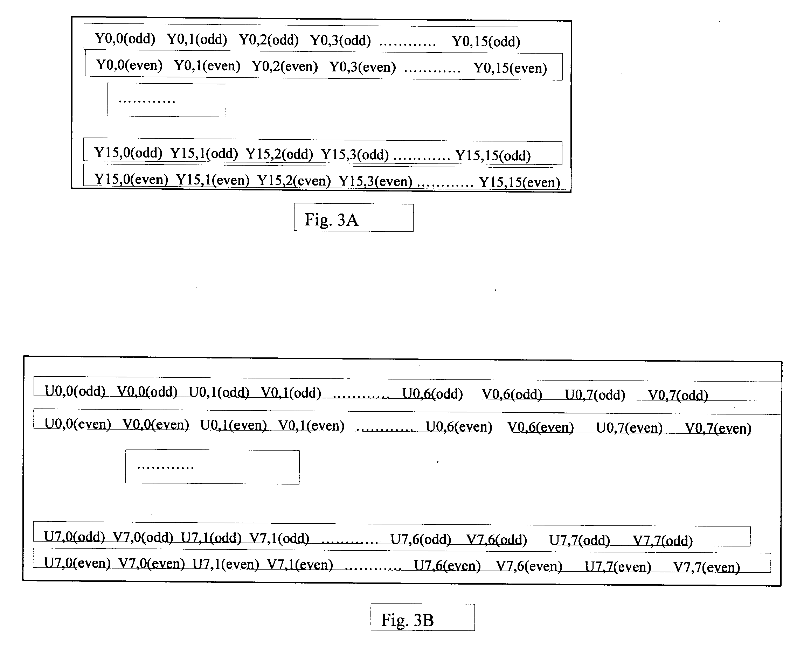

Referring to Fig. 1, in YUV format, each component of a picture frame is represented by a block. The reference numbers of FIG. 1 respectively stand for Y component, U component and V component. Each type of component of a frame picture is divided to a plurality of rectangular macroblocks. This invention is interpreted here with an exemplary decoding method with sampling structure of 4:2:0. With structure of 4:2:0, regardless of row direction or column direction, a sampling rate of luminance component is double as against a sampling rate of chroma component. Therefore, a Y macroblock generally has 16.time.16 pixels, totally 256 pixels; while a U macroblock or a V macroblock generally has 8.times.8 pixels, totally 64 pixels. Relation of the sampling rate of luminance component against the sampling rate of chroma component will vary when decoding with other sampling structures, for example a sampling structure of 4:2:2. Correspondingly, size of Y, U, V macroblock may vary. This does not take actual influence on practice of this invention. In one embodiment of the present invention, Y component data and UV component data of YUV format picture data may be stored separately in the memory. For example, Y component data are mapped firstly; UV component data are arrayed together and are mapped by means of Packet, as shown in Fig. 3B (more description is seen below).

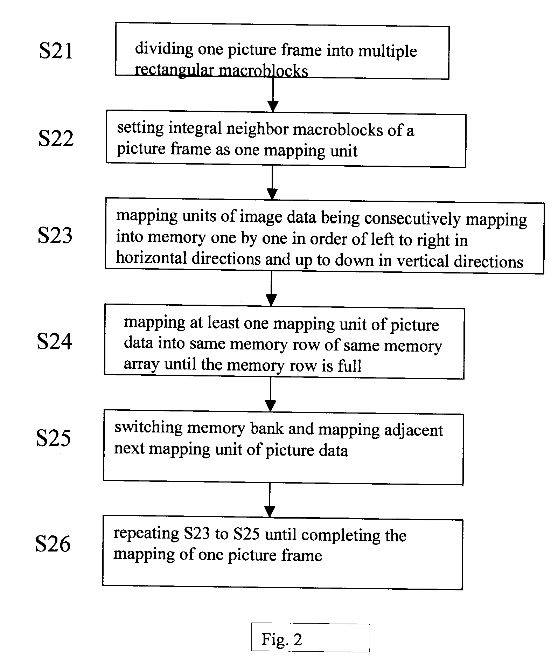

Referring to Fig. 2, this invention discloses a method for mapping picture data to memory addresses. This method maps decoded picture data to corresponding memory addresses. The memory has at least two memory banks, each bank comprising a plurality of memory rows. At step S21, a picture frame is divided into a plurality of rectangular macroblocks; At step S22, integral neighboring macroblocks of a picture frame are set as one mapping unit; At step S23, one by one, the mapping units of picture data are consecutively mapped into the memory in the order of left to right in horizontal directions and up to down in vertical directions; At step S24, at least one mapping unit of picture data are mapped into the same memory row of the same memory bank until the memory row is full; At step S25, the memory bank switches, and the adjacent next mapping unit of image data are mapped. At step S26, the steps S23-S25 are repeated until completing the mapping of one image frame.

The size of one mapping unit suits for length of one memory row of the memory such that the length of one memory row of the memory is integral times as much as the size of one mapping unit.

The memory is a memory module including a DRAM core, for example SDRAM and DDR.

In one embodiment of this invention, integral vertically neighboring macroblocks are set as one mapping unit. In another embodiment of this invention, one mapping unit includes two vertically neighboring macroblocks.

In another embodiment of this invention, one mapping unit includes the Nth power of two of neighboring macroblocks, in which N is an integer.

All the pixels of each mapping unit are consecutively, and one by one, mapped into the memory in the order of left to right in horizontal directions and up to down in vertical directions.

When a reference macroblock in the memory is accessed, the memory is accessed in the order of left to right in horizontal directions and up to down in vertical directions.

According to MPEG standards, decoding output format includes field output format and frame output format. A decoder receives Transport Stream from a front end transmitter, and decodes to achieve video data. The Transport Stream includes relevant information on decoding output format. After decoding, the decoder can get the decoding output format of video picture data.

A picture frame, which is field output, comprises odd field and even field. Macroblocks of each mapping unit comprise odd field pixels and even field pixels, which are interlaced. The odd field pixels of each mapping unit are mapped in turn to the memory in the order of from left to right and from up to down, and the even field pixels of each mapping unit are also mapped in turn to the memory in the order of from left to right and from up to down. The picture data of field output firstly output all the odd field pixels, and output all the even field pixels. Thus, when storing, all the odd field pixels of a picture frame are stored firstly, and all the even field pixels of a picture frame are stored. The odd field pixels and the even field pixels are interlacedly mapped to the memory.

All the pixels of each mapping unit of frame output picture data are consecutively and in turn mapped and stored to the memory in the order of from left to right and from up to down.

Fig. 3A illustrates the order of Y macro blocks mapped to memory addresses in sampling structure of 4:2:0, and Fig. 3B illustrates the order of UV macroblocks mapped to memory addresses. With sampling structure of 4:2:0, any Y macroblock of Y component of a picture frame is 16.times.16 pixels in size, including 16 rows, and each row including 16 pixels. Any U or V macroblock of U or V component of a picture frame is 8.times.8 pixels in size, including 8 rows, and each row including 8 pixels. In the embodiment of Fig. 3B, UV macroblocks are arrayed together instead of separate with U picture and V picture, and are mapped by means of packet. Pixels of U macroblocks and V macroblocks are interlaced. The packet array allows parallel accessing of U component and V component in one instruction cycle, decreasing the times of accessing to the memory, thereby decreasing the requirement of bandwidth when accessing to the memory. A packet UV macroblock is 16.times.8 pixels in size, including 16 rows, and each row including 8 pixels. U0,0 ( odd ) and U0,0(even) in the drawings respectively represent odd row pixels and even row pixels in frame output format, and odd row pixels and even row pixels in field output format.

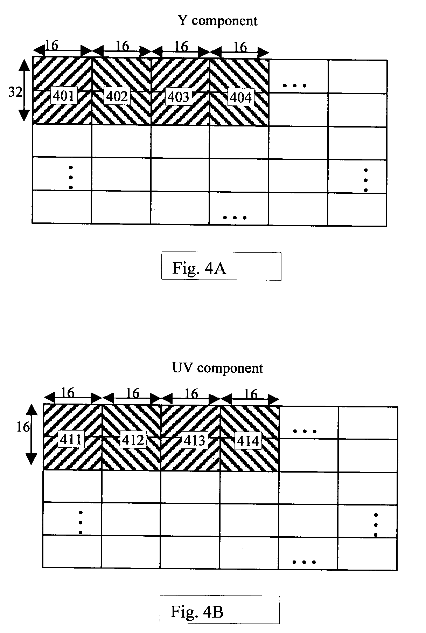

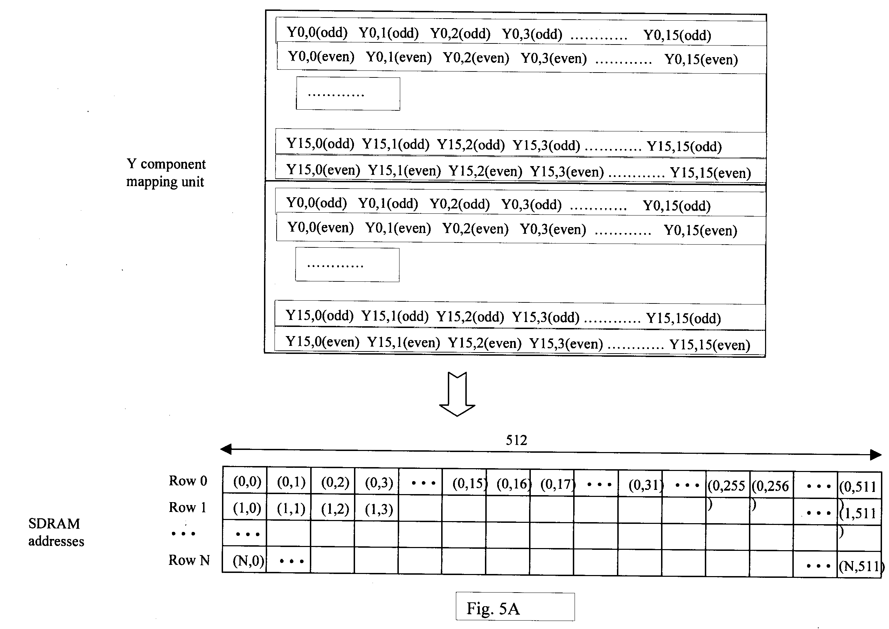

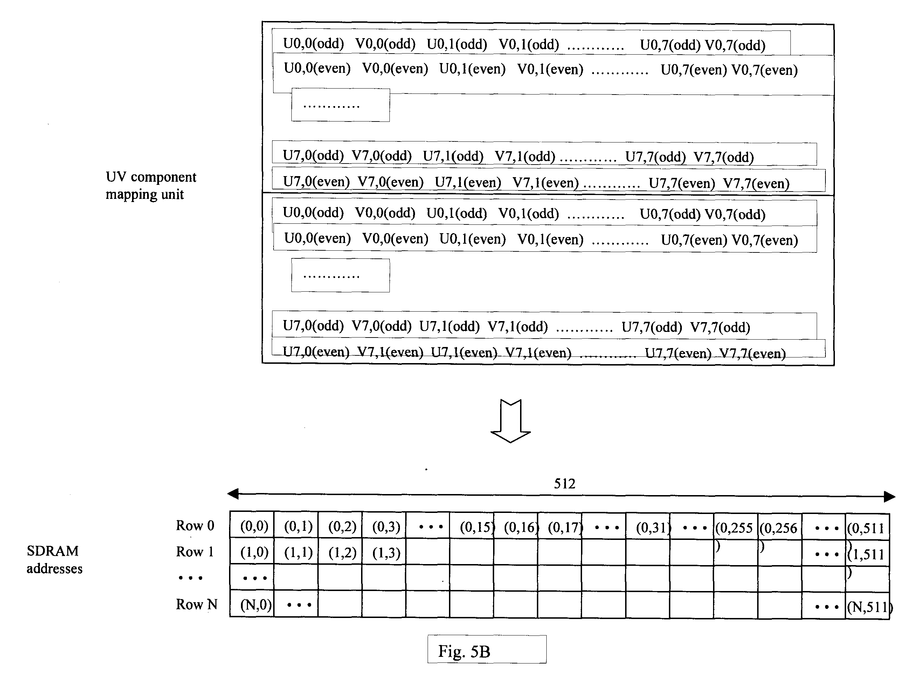

Referring to Figs. 4A, 4B, 5A and 5B, in one embodiment of this invention, a component mapping unit comprises two vertically neighboring macroblocks in a picture frame. Figs. 4A and 4B respectively exemplarily illustrate a Y component of a picture frame and a UV component of a frame picture. Figs. 5A and 5B respectively exemplarily illustrates a Y component mapping unit of a picture frame and a UV component mapping unit of a frame picture.

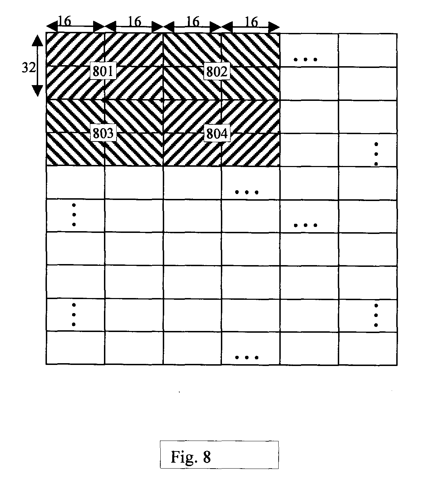

When Y component is mapped to the memory addresses, two vertically neighboring macroblocks of Y component frame picture are set as a Y component mapping unit. Pixels of each mapping unit are consecutively and in turn mapped to the memory from left to right in horizontal direction and up to down in vertical direction. In other embodiments, size of a Y component mapping unit may vary. Each Y component mapping unit includes integral Y macroblocks, and the Y macroblocks are vertically neighboring or horizontally neighboring. For example, in Fig. 8, each mapping unit includes four neighboring macroblocks. The numeral references 801, 802, 803, 804 respectively depict the four mapping units, each mapping unit comprising four horizontally or vertically neighboring macroblocks.

In the embodiment of Figs. 4A and 5A, one mapping unit comprises two Y macroblocks of 16.time.16 pixels, totally 512 pixels. Each pixel is 1 byte. In Fig. 4A, the inclined lines in various directions clarify neighboring Y component mapping units. Each Y component mapping unit includes two vertically neighboring Y macroblocks.

Length of each memory row of a memory is integral times as the size of Y component mapping unit. All the pixels of a frame picture of frame output format are consecutively and one by one stored in the memory in the order of from left to right in horizontal direction and from up to right in vertical direction. As for picture data of field output format, pixels of an odd field of a frame picture are stored firstly, and pixels of an even field of a frame picture are stored. The pixels of the odd field and the even field are mapped to the memory in interlaced array. Regardless of frame output format or field output format, a picture frame are one by one and consecutively stored in the memory in the order of from left to right in horizontal direction and from up to right in vertical direction. During addresses mapping, the pixels of each mapping unit are mapped to the same row of the same bank. Once a row is full, the bank is switched and the next mapping unit is mapped. The pixels of the first Y macroblock of the first Y component in the frame picture are first mapped. The pixels of the second Y macroblock, which are located below the first Y macroblock, are mapped. The pixels of odd field/odd row of the first Y macroblock are in turn mapped to the memory addresses in the order of from left to right in horizontal direction and from up to right in vertical direction. The pixels of even field/even row of the first Y macroblocks are consecutively mapped to the memory addresses in the order of from left to right in horizontal direction, and from up to right in vertical direction. The odd field/odd row pixels are interlaced to the even field/even row pixels. A pixel Y0,0(odd) of the first Y macroblock is mapped to the first address( 0,0 )of a memory row Row0 of the memory. A pixel Y0,1(odd) is mapped to the second address ( 0 , 1 ) of the same memory row Row0, ......and so on. An even field/even row pixel Y0,0(even) is mapped to a seventeenth address(0,16) of the same row Row0 of the memory, ......and so on. Pixels of the second Y macroblock of the Y component mapping unit are consecutively and one by one mapped to the same row of the memory beginning at the 257^{th} address(0,256) in order of from left to right and from up to down until the last even field pixel Y15,15(even) of the second Y macroblock is mapped to the 512^{th} address ( 0 , 511 ) of the first row Row0. Similarly, the odd field/odd row pixels are interlaced to the even field/even row pixels. Because length of one memory row of the memory is 512 byte and one Y component mapping unit is 512 byte, one Y component mapping unit fills one memory row exactly. The bank is switched for mapping the immediately following Y component mapping unit.

Y component of a frame picture in Fig. 4A is mapped in order of from left to right in horizontal direction and from up to down in vertical direction, in which one Y component mapping unit is set as one unit. After mapping of one Y component mapping unit, other pixels of the frame picture continue to be mapped in the same way, that is, two vertically neighboring macroblocks are set as one Y component mapping unit, and are mapped in order of from left to right in horizontal direction and from up to down in vertical direction.

Referring to Figs. 4B and 5B, a method for mapping UV component is similar to that for Y component. UV component are mapped consecutively and one by one with two vertically neighboring macroblocks of a frame picture as one mapping unit. When UV component is mapped, one U macroblock of 8.times.8 pixels and one V macroblock of 8.times.8 pixels packet together, forming a UV macroblock of 16.times.8 pixels. Two vertically neighboring UV macroblocks is one UV component mapping unit. One UV component mapping unit has size of 16.times.16 pixels, namely 256 pixels. Odd field/odd row pixels and even field/even row pixels of each UV component mapping unit are respectively consecutively and one by one mapped to the memory in order of from left to right in horizontal direction and from up to down in vertical direction. The odd field/odd row pixels and the even field/even row pixels are interlaced. In Fig. 5B the first UV macroblock of the UV component mapping unit is mapped first. It is assumed that, an odd field/odd row pixel U0,0(odd) of the first UV macroblock is mapped to the first address (0,0) of a memory row Row0 of the memory, the pixel V0,0(odd) is mapped to the second address (0,1) of the same row Row0 of the memory, ......the pixel U7,7(even) is mapped to the 127th address (0,126) of the same row Row0 of the memory, and the pixel V7,7(even) is mapped to the 128th address (0,127) of the same row Row0 of the memory. Then the next second UV macroblock is mapped. An odd field/odd row pixel U0,0(odd) of the second UV macroblock is mapped to the 129th address (0,128) of a row Row0 of the memory, the pixel V0,0(odd) is mapped to the 130th address (0,129) of the same row Row0 of the memory, ......the pixel U7,7(even) is mapped to the 255th address (0,254) of the same row Row0 of the memory, and the pixel V7,7(even) is mapped to the 256th address (0,255) of the same row Row0 of the memory. In the embodiment of Fig. 5B, length of a memory row of the memory is 512 byte, and one memory row can store two complete UV component mapping unit.

The UV component signals of the whole frame picture, in one unit of a UV component mapping unit, are mapped in order of from left to right in horizontal direction and from up to down in vertical direction. A UV component mapping unit has 256 pixels, and one 512-byte memory row can store two horizontally neighboring UV component mapping units. As shown in Fig. 4B, each UV component mapping unit is mapped to the memory addresses in order of from left to right in horizontal direction and from up to down in vertical direction. After two vertically neighboring UV macroblocks of a UV component mapping unit are mapped, other pixels of the frame picture are mapped in the same way, that is, two vertically neighboring macroblocks are set as one UV component mapping unit and as one physically continuous storing cycle.

According to the method for mapping Y component and UV component, a memory row of the memory is 512 byte in length. Two vertically neighboring 16.time.16 Y macroblocks of a Y component mapping unit can be stored in the same memory row of the same bank. A UV macroblock is 16.times.8 pixels, and one UV component mapping unit includes two UV macroblocks of 16.times.8 pixels. One memory row can store two UV component mapping units. Therefore it is assured that, two vertically neighboring macroblocks of one Y component mapping unit or one UV component mapping unit can be stored in the same memory row of the same memory bank. When accessing two vertically neighboring macroblocks of a component mapping unit, only one memory row of one memory bank needs to be accessed, and therefore, needs no precharge, thereby saving consumption.

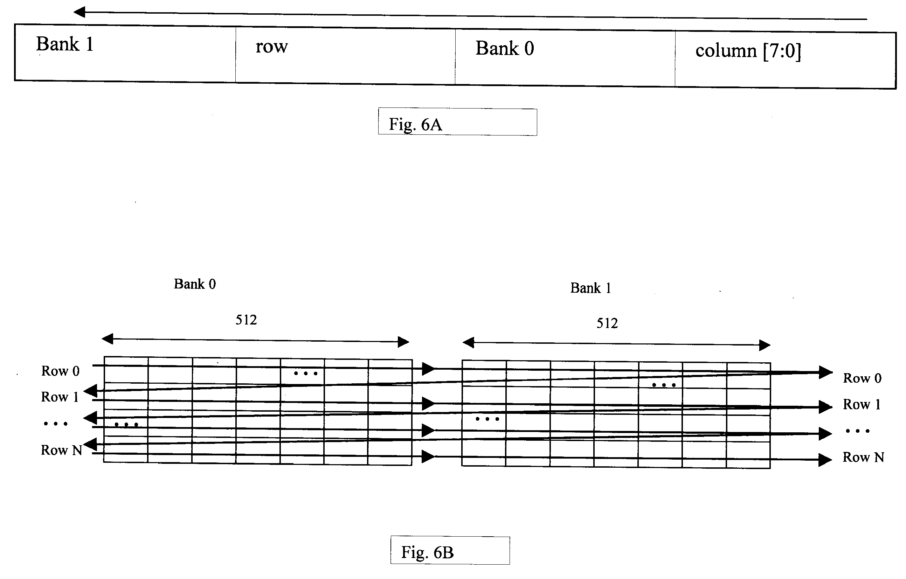

Y macroblocks and UV macroblocks are mapped in the order and direction as shown in Fig. 6A. The arrow of Fig. 6B further depicts the order of the macroblocks of the frame picture mapped in the memory. Y component or UV component of a frame picture are mapped to the memory in order of from left to right in horizontal direction and from up to down in vertical direction and consecutively at the same memory row of the same bank, for example the first memory row Row0 of the Bank0. When the memory row is full, bank is switched instead of mapping in another memory row of the same bank. For example, the first row Row0 of the Bank0 is switched to the first row Row0 of the Bank1. When the first row Row0 of the Bank1 is full, bank is switched back to Bank0, and to another row of the Bank0, for example the second memory row Row1 of the Bank0. A frame picture is mapped to memory addresses, in a unit of one component mapping unit and in order of from left to right in horizontal direction and from up to down in vertical direction. Two vertically neighboring macroblocks of a mapping unit are always mapped to the same memory row of the same bank. One Y component mapping unit includes two vertically neighboring macroblocks, and one Y component mapping unit is mapped to one memory row of the memory. When different mapping units finish mapping, the next mapping unit is mapped after bank is switched. Accordingly, macroblocks of two horizontally neighboring Y component mapping units of a frame picture are always mapped to different banks. A UV component mapping unit includes two vertically neighboring macroblocks, and two UV component mapping units are mapped to one memory row of the memory. Therefore two situations may occur when macroblocks of two horizontally neighboring UV component mapping units are mapped. The first is the macroblocks are mapped to the same memory row; and the second is the macroblocks are mapped to the different banks. Thus, regardless of Y component or UV component, when accessing macroblocks of two horizontally neighboring mapping units, only different banks of the memory or the same memory row of the same bank are accessed, and precharge is not required. So precharge efficiency decreases, time efficiency and efficiency of accessing memory increases.

In writing output of motion compensation, a macroblock is set as a unit, and a start address is aligned according to macroblocks. One macroblock is certain to be mapped to the same memory row of the same bank of the memory. In reading input of motion compensation, a start address is random. Reference macroblocks are looked up first in horizontal direction and in vertical direction when accessing reference macroblocks of the memory.

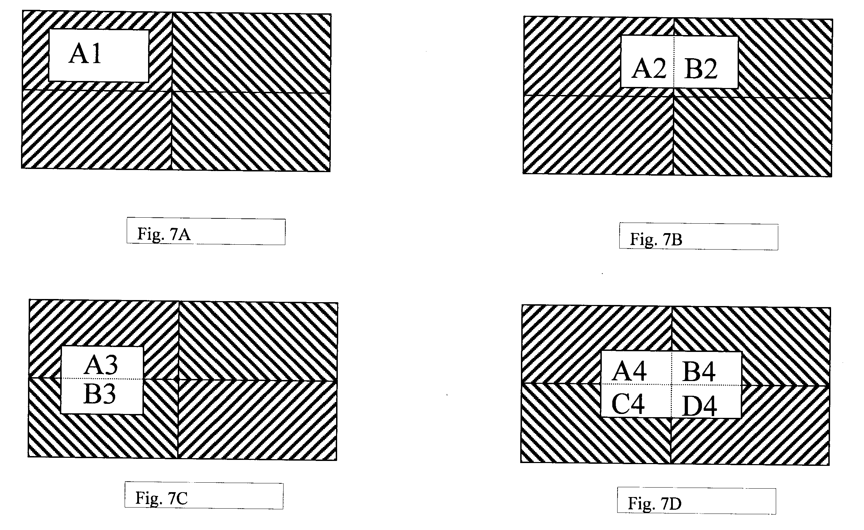

Motion compensation is set as an example to use this method for mapping picture addresses. Figs. 7A-7D illustrate four situations when accessing reference macroblocks of a reference frame. In Figs. 7A-7D, background blocks stand for four mapping units horizontally or vertically neighboring in a frame picture.

In Fig. 7A, a reference macroblock A1 to be accessed is totally in the scope of one macroblock of a frame picture. Inside A1 must be mapped to the same row address of the same bank. The reference macroblock does not miss memory row. Other memory row of the same bank need not be opened as of the reference macroblock accessing a start address, and therefore need not precharge.

In Fig. 7B, a reference macroblock is totally in the scope of two horizontally neighboring macroblocks of a frame picture. This reference macroblock can be divided into two parts, A2 and B2. One macroblock of the frame picture is stored in the same memory row of the same bank, and has the same memory row address. So, inside A2 must have the same memory row address, and inside B2 must have the same memory row address. According to the description as mentioned before, two horizontally neighboring mapping units of Y component are always mapped to different banks. Correspondingly, A2 and B2 are always mapped to different banks. Two situations may occur to two horizontally neighboring mapping units of UV component. The first is that two horizontally neighboring mapping units of UV component may be mapped to the same row address of the same bank; the second is that two horizontally neighboring mapping units of UV component may be mapped to different banks. Regardless of A2 and B2 being mapped to either the same row address of the same bank or different banks, precharge is not needed when A2 switches to B2. Thus, in Fig. 7B, precharge is not needed as of the reference macroblock accessing a start address.

In Fig. 7C, a reference macroblock is entirely in the scope of two vertically neighboring macroblocks of the frame picture. The reference macroblock can be divided into two parts, A3 and B3. Inside A3 have the same memory row address, and inside B3 has the same memory row address. According to the description as mentioned before, two vertically neighboring mapping units in one mapping unit are always mapped to the same memory row address of the same bank. If A3 and B3 are not in the same mapping unit, address mapping relation between A3 and B3 are random. The memory row misses once, and once precharge is needed if A3 and B3 are mapped to the same bank. The memory row does not miss and precharge is not needed if A3 and B3 are mapped to the different banks. This also demonstrates that, the method for address mapping according to the present invention can reduce probability of precharge under the state of the Fig. 7C.

In Fig. 7D, a reference macroblock can be divided into four parts, A4, B4, C4 and D4, which are located in four different macroblocks, respectively. The four parts A4, B4, C4 and D4 are respectively in individual component mapping units, and therefore, inside each part has the same memory row address individually. A4 and B4 are in horizontally neighboring component mapping units, and are therefore mapped to the same memory row of the same bank or different banks. precharge is not needed. C4 and D4 are in horizontally neighboring component mapping units, and need not precharge, too. C4 and D4 have memory row address different from the A4 and B4. Memory row misses at most once when B4 switches to C4. Thus, memory row misses at most once under the state of Fig. 7D.

In addition, when transferring data in the memory to a display, accessing operation of display input switches between two banks of the memory. While accessing one bank, the other bank can precharge in advance. The address mapping method of this invention also increases bandwidth efficiency of display input.

The embodiment only describes more clearly, but does not limit, the present invention. It should be appreciated that, the present invention is not limited in the interpretation of the embodiment, and that, any modifications and equivalents of the present invention should be covered by the spirit and scope of the claims of the present invention.

## Claims

1. A method for mapping picture addresses in a memory, such that decoded picture data can be mapped in corresponding address in a memory, the memory comprising at least two memory banks, each of which comprising a plurality of memory rows, the method comprising:
(a) dividing a picture frame into a plurality of rectangular macroblocks;
(b) setting integral neighboring macroblocks of an picture frame as one mapping unit;
(c) the mapping units of picture data being consecutively, and one by one, mapped into the memory in the order of left to right in horizontal direction and up to down in vertical direction;
(d) mapping at least one mapping unit of picture data into the same memory row of the same memory bank until the memory row is full;
(e) switching the memory bank, and mapping adjacent next mapping unit of picture data; and
(f) the steps (c), (d) and (e) being repeated until completing the mapping of one picture frame.

2. The method as claimed in claim 1, wherein the step (d) further comprises the pixels of each macroblock of one mapping unit being consecutively stored in the same memory row of the same memory bank of the memory.

3. The method as claimed in claim 1 or 2, wherein the step (b) further comprises setting integral vertically neighboring macroblocks of a picture frame as one mapping unit.

4. The method as claimed in claim 3, wherein the step (b) further comprises setting two vertically neighboring macroblocks of a picture frame as one mapping unit.

5. The method as claimed in claim 3, wherein the step (b) further comprises setting the Nth power of two of vertically neighboring macroblocks of a picture frame as one mapping unit, in which N is a positive integer.

6. The method as claimed in claim 1 or 2, wherein when the picture data are YUV format, the step (c) further comprises Y component signals being mapped firstly, and UV component signals being arrayed together and mapped by means of packet.

7. The method as claimed in claim 2, wherein when the picture data are field output, and macroblocks of each mapping unit comprise interlaced odd field pixels and even field pixels, the step (c) further comprises the odd field pixels being mapped consecutively and one by one to the memory in order of from left to right and from up to down, and the even field pixels of each mapping unit being mapped consecutively and one by one to the memory in order of from left to right and from up to down, the odd field pixels and the even field pixels being interlaced.

8. The method as claimed in claim 7, wherein the step (c) further comprises all the odd field pixels of a picture frame being mapped firstly, and all the even field pixels of a picture frame being mapped.

9. The method as claimed in claim 1 or 2, wherein during mapping, reference macroblocks in the memory are accessed in order of from left to right in horizontal direction and from up to down in vertical direction.

10. The method as claimed in claim 1 or 2, wherein size of one mapping unit suits for length of one memory row of the memory such that the length of one memory row of the memory is integral times as much as the size of one mapping unit.
